# EUROPEAN PATENT APPLICATION

(11) **EP 2 564 908 A1**
(43) Date of publication of application: **06.03.2013**
(21) Application number: 11179318.8
(22) Date of filing: 30.08.2011
(51) Int. Cl.: A63F 13/02, A63F 13/06, A63F 13/08

(54) **Supplementary game controller for tablet computer**

(71) Applicant: Jow Tong Technology Co., Ltd., Tainan City (TW)
(72) Inventor: LIN, CHUNG-HUNG, Tainan City (TW)
(74) Representative: Jeannet, Olivier

(57) **Abstract**

A supplementary game controller for tablet computers is revealed. The supplementary game controller for tablet computers includes a universal ball joint (3) disposed between a fixing base (1) and a connection base (2). The fixing base (1) is fixed on a plane while the connection base (2) is used to hold a tablet computer. Thereby the supplementary game controller is inclined at different angles or rotated in different directions through the universal ball joint (3) while users hold the connection base (2) so as to control characters and movements in games running on the tablet computer.

## Description

### BACKGROUND OF THE INVENTION

### 1. Field of the Invention

The present invention relates to a supplementary game controller for tablet computers, especially to a supplementary game controller for tablet computers that holds a tablet computer so that the tablet computer can be inclined at different angles or rotated in different directions for control of games running on tablet computers.

### 2. Description of Related Art

Due to continuous innovation of computer technology, video games have become essentials in tablet computers. The control of video games has evolved from simple multi-touch interfaces in earlier days to recent gyroscopes that measure movements and tilt angles of tablet computers so as to control characters and movements such as turning, jumping, balancing, etc in video games on the tablet computers.

Nowadays users can only rotate or tilt the tablet computer while playing games. If the users get excited or neglected, the tablet computer may fall off and get damaged during the games. Or the tablet computer can be fixed on a supplementary controller such as a steering wheel for racing games. While rotating the steering wheel (supplementary controller), characters in the games are controlled to turn right or left synchronously. However, such control mode is only suitable for racing games. For other kinds of games in which the characters require more movements including descending, ascending, jumping, balancing, etc., the supplementary controller is unable to be applied.

### SUMMARY OF THE INVENTION

Therefore it is a primary object of the present invention to provide a supplementary game controller for tablet computers that provides multi-directional control of games on tablet computers so that characters in games can not only make a simple left-turn or right-turn but also have other movements or modes.

In order to achieve the above object, a supplementary game controller for tablet computers of the present invention includes a fixing base, a connection base and a universal ball joint. The universal ball joint is disposed between the fixing base and the connection base and the fixing base is fixed on a plane. As to the connection base, it is used to hold a tablet computer. The supplementary game controller is moved or rotated in different directions through the universal ball joint while users hold the connection base so as to control characters and movements in games running on the tablet computer.

Moreover, a fastener is disposed on at least two corners on a diagonal line of the connection base so as to lock and fix the tablet computer diagonally.

Furthermore, the fastener is mounted in a sliding slot of the connection base and moved within the sliding slot. Thus the position of the fastener inside the sliding slot is able to be adjusted according to the size of the tablet computer. Therefore the tablet computer having different sizes can be fixed on the connection base.

In addition, the connection base is further mounted with a wireless video transceiver therein so that image and audio signals are sent from the tablet computer to a display with a wireless video receiver in a wireless way to be displayed.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an explosive view of an embodiment of a supplementary game controller according to the present invention;
Fig. 2 is a partial explosive view of an embodiment of a supplementary game controller according to the present invention;
Fig. 3 is an assembled view of an embodiment of a supplementary game controller according to the present invention;
Fig. 4 is a cross sectional view of an assembled embodiment of a supplementary game controller according to the present invention;
Fig. 5 is a perspective view showing an embodiment of a supplementary game controller set with a tablet computer according to the present invention;
Fig. 6 is a rear view showing an embodiment of a supplementary game controller set with a tablet computer according to the present invention;
Fig. 7 is an enlarged partial cross sectional view showing an embodiment of a supplementary game controller set with a tablet computer according to the present invention;
Fig. 8 is another enlarged partial cross sectional view showing an embodiment of a supplementary game controller set with a tablet computer according to the present invention;
Fig. 9 is an enlarged partial cross sectional view showing another embodiment of a supplementary game controller set with a tablet computer according to the present invention.

### DETAILED DESCRIPTION OF THE PREFERRED EMBODIMENT

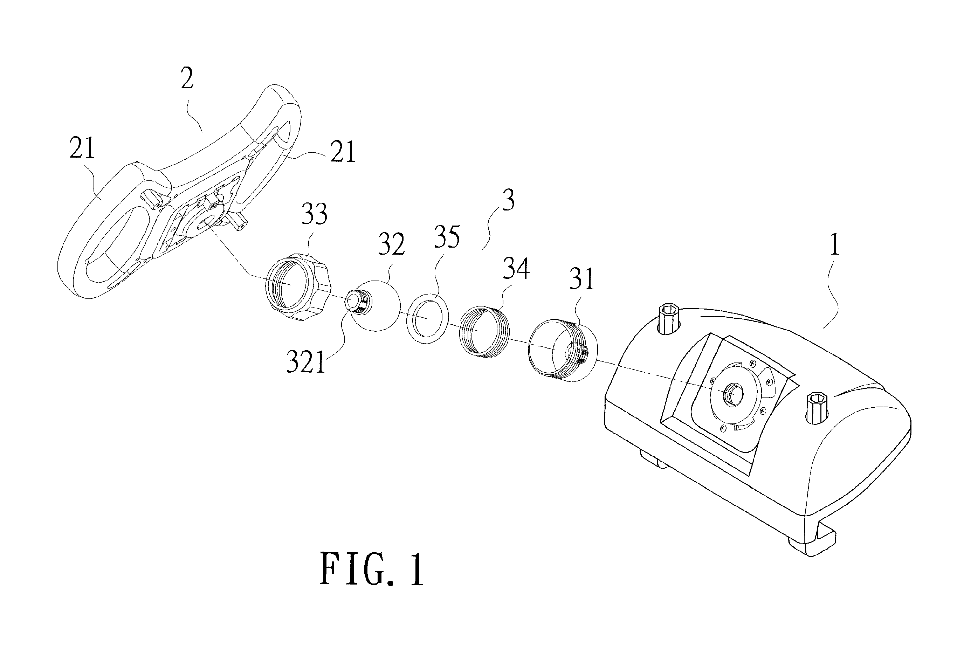

Refer to Fig. 1, a supplementary game controller of tablet computers according to the present invention includes a fixing base 1, a connection base 2 and a universal ball joint 3. The universal ball joint 3 is arranged between the fixing base 1 and the connection base 2. The fixing base 1 is fixed on a plane such as a desk surface and a tablet computer 4 is set on the connection base 2.. Thus users can hold the connection base 2 by their hands and manipulate the connection base 2 moving or rotating in different directions through the universal ball joint 3so as to control characters and movements in games running on the portable device 4.

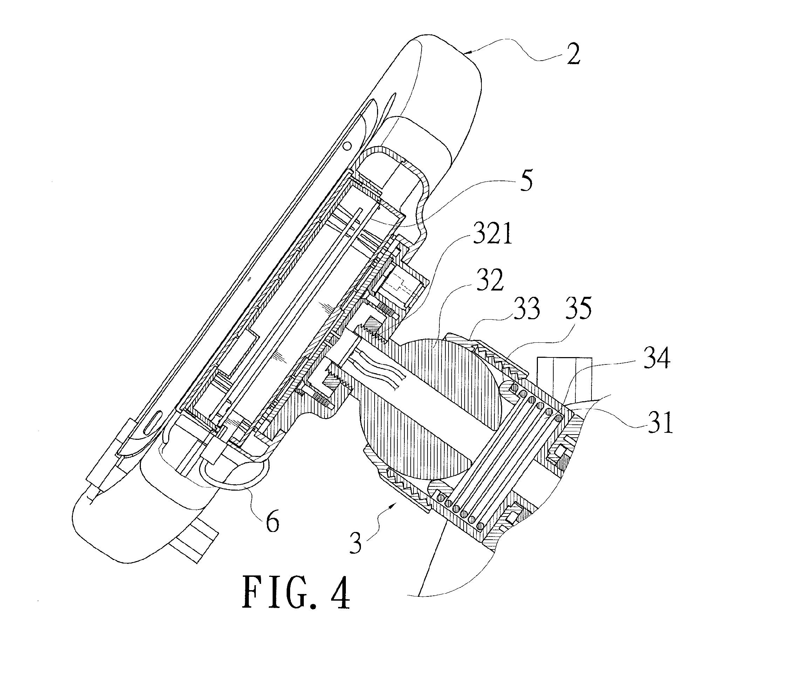

The universal ball joint 3 consists of an assembly sleeve 31 and a ball 32. In an embodiment of the present invention, the universal ball joint 3 further includes a fastening sleeve 33, as shown in Fig. 1 and Fig. 4. An assembly portion 321 is disposed on one end of the ball 32. The ball 32 is mounted in the assembly sleeve 31 and then the fastening sleeve 33 is threaded and connected to the assembly sleeve 31 while the assembly portion 321 of the ball 32 extends out of the fastening sleeve 33 to be fixed on and connected to the connection base 2. Then the assembly sleeve 31 is fixed on the fixing base 1. Thus the universal ball joint 3is disposed between the fixing base 1 and the connection base 2.

The universal ball joint 3 further includes an elastic part 34 mounted in the assembly sleeve 31 and a ring gasket 35 placed around a top end of the elastic part 34. The ring gasket 35 is against the ball 32. Thereby the universal ball joint 3 has elasticity along an axial direction of the assembly sleeve 31 due to the arrangement of the elastic part 34. As to the ring gasket 35, it allows the rotation of the ball 32 becoming smoother.

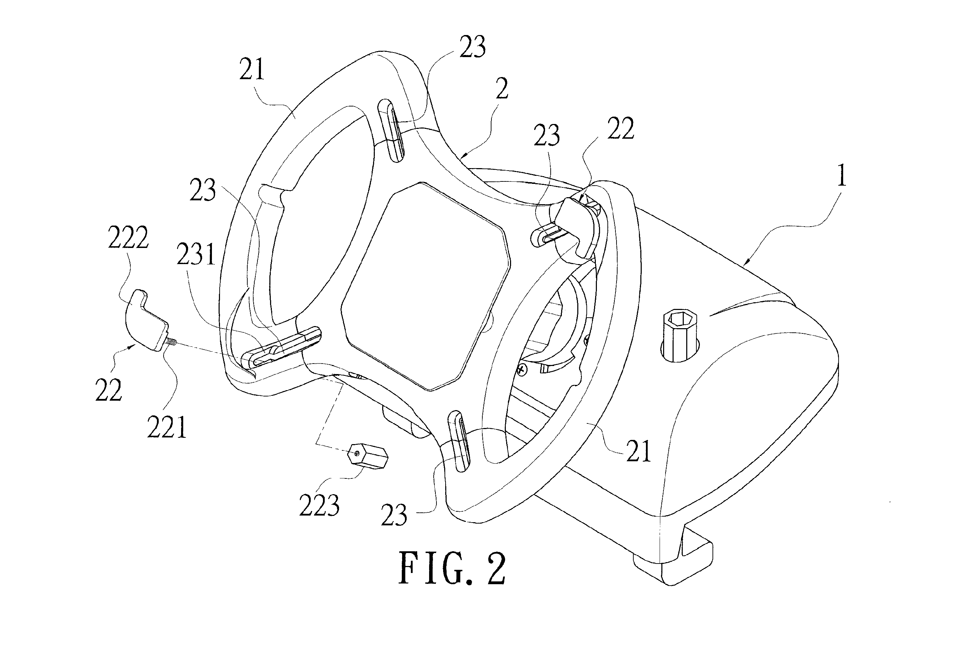

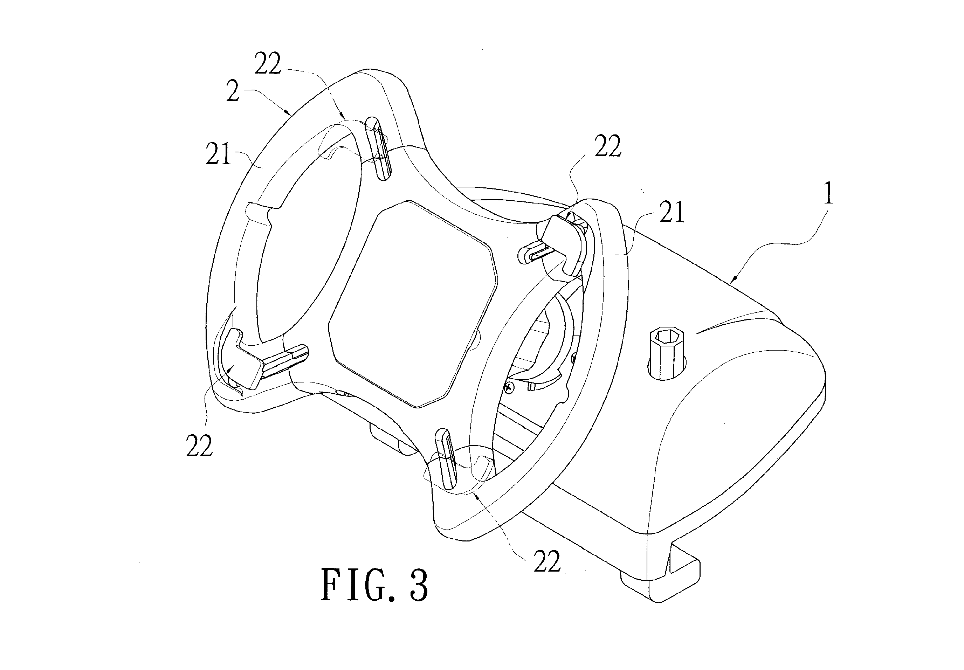

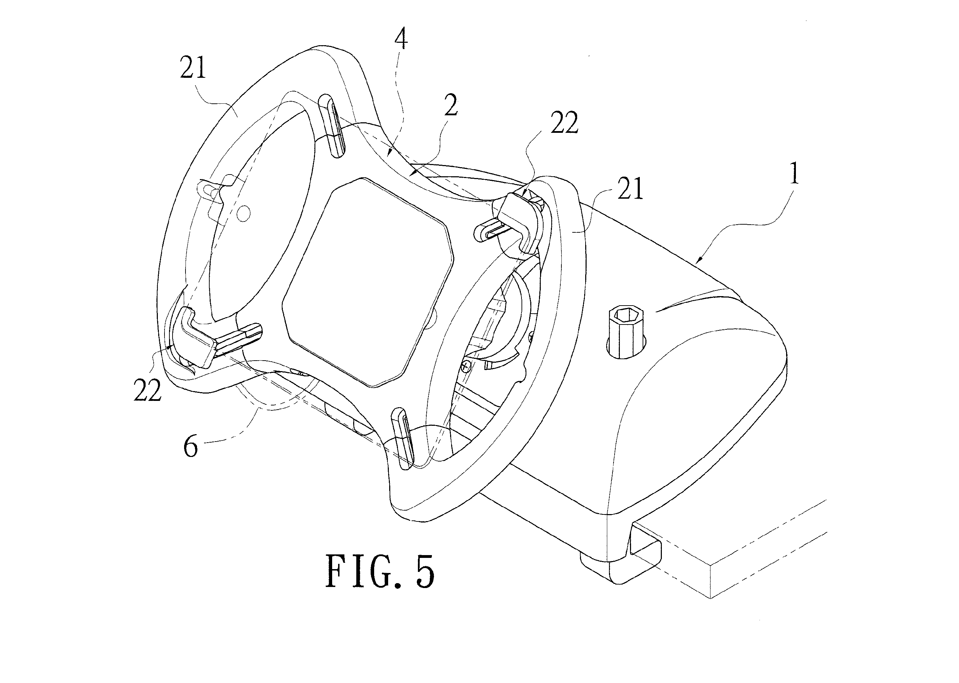

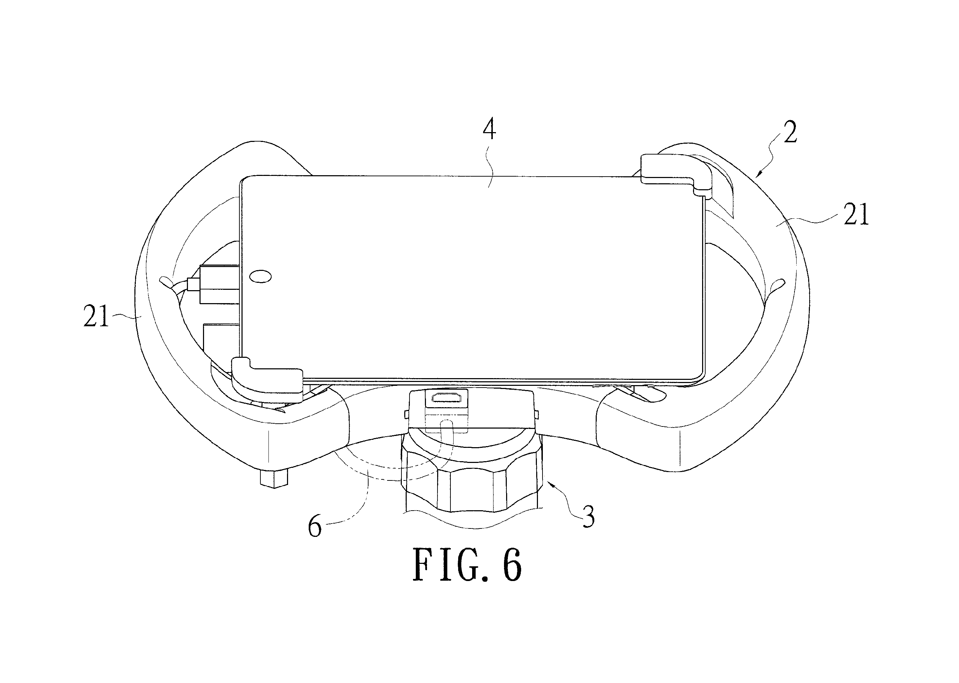

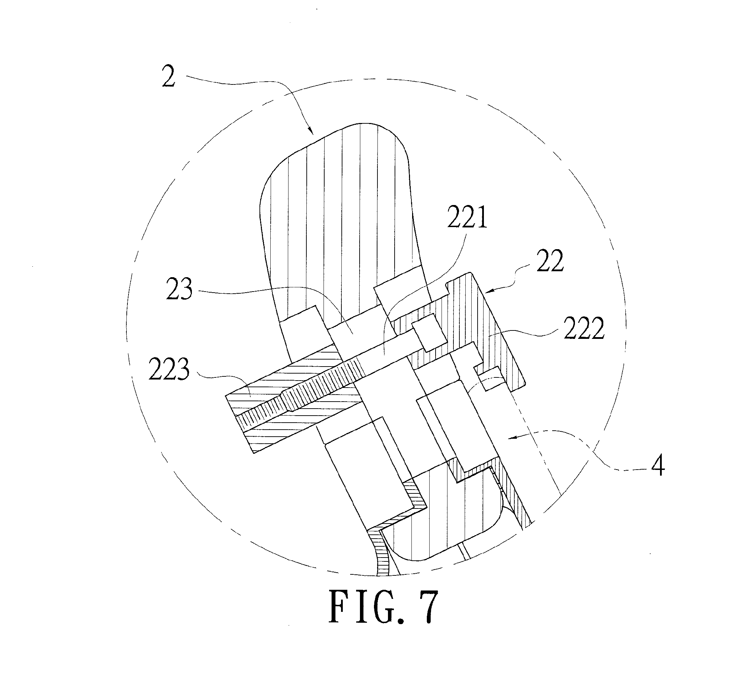

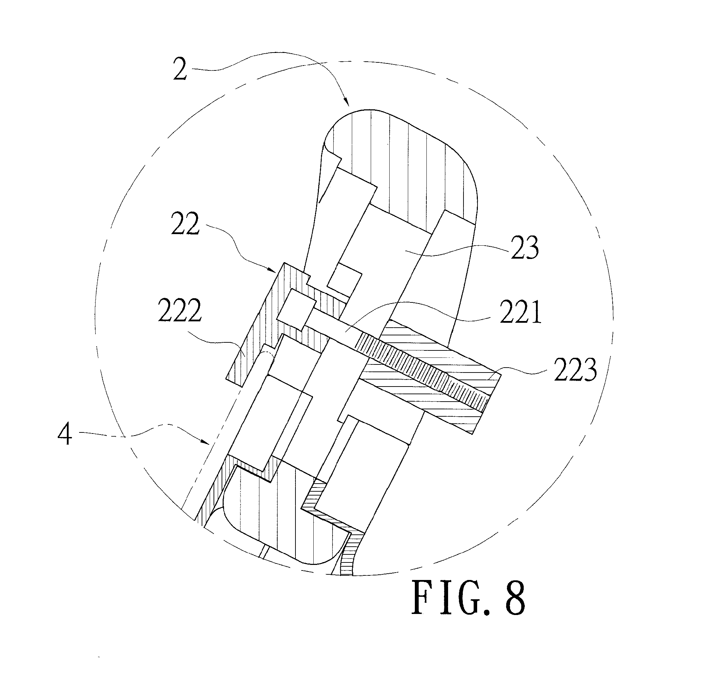

A handle 21 is disposed on each of two sides of the connection base 2 so that users can hold and manipulate the connection base 2 conveniently and easily. Moreover, refer to Fig. 2, Fig. 3, Fig. 5 and Fig. 6, a fastener 22 is disposed on at each of least two corners on at least one diagonal line of the connection base 2 so as to lock and fix the tablet computer 4 diagonally. Refer to Fig. 7 and Fig. 8, a sliding slot 23 corresponding to each fastener 22 is arranged at the connection base 2. The fastener 22 is mounted in the sliding slot 23 and moved within the sliding slot 23. The fastener 22 includes a threaded rod 221 and a stop block 222 on a top end of the threaded rod 221. The stop block 222 is used to lock and press one corner of the tablet computer 4. A bottom end of the threaded rod 221 is passed through the sliding slot 23 to be connected and fastened to a threaded cap 223. Thus users can adjust the position of the fastener 22 inside the sliding slot 23 according to the size of the tablet computer 4. Therefore the tablet computer 4 having different sizes can be fixed on the connection base 2.

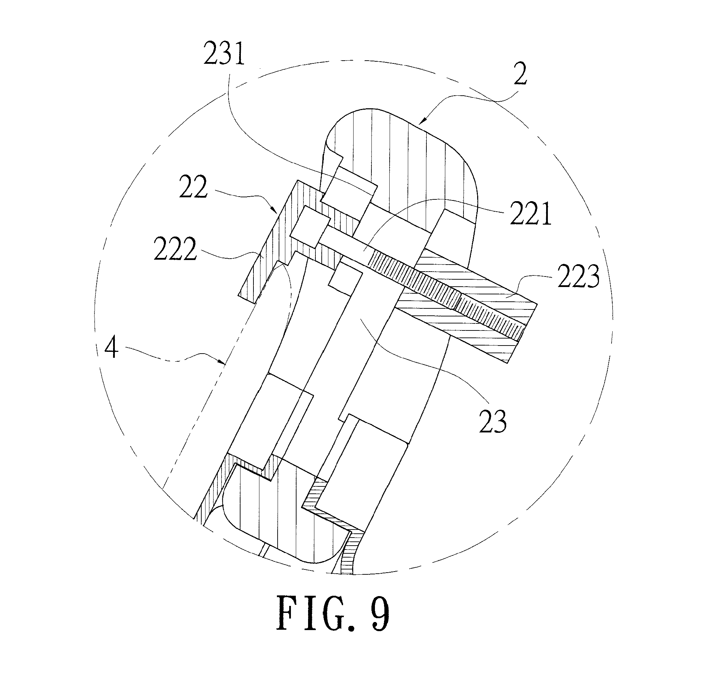

Furthermore, refer to Fig. 9, a projection portion 231 is arranged at the periphery of each sliding slot 23 set diagonally so as to increase the distance between the stop block 222 of the fastener 22 and a top surface of the connection base 2. Thus the tablet computer 4 with larger thickness can still be set and fixed on the connection base 2.

In addition, refer from Fig. 4 to Fig. 6, a wireless video transceiver 5 is disposed in the connection base 2. A signal line 6 is used to connect the tablet computer 4 and the wireless video transceiver 5 so that video signals from the tablet computer 4 are transmitted to the wireless video transceiver 5. Then the wireless video transceiver 5 sends the video signals having image signals and audio signals to a display (not shown in the figure) disposed with a wireless video receiver. Thus the image signals and audio signals can be sent from the tablet computer 4 to be shown on the display.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A supplementary game controller for tablet computers comprising a fixing base (1), a connection base (2) and a universal ball joint (3);
wherein the universal ball joint (3) is arranged between the fixing base (1) and the connection base (2); the universal ball joint (3) includes an assembly sleeve (31) fixed on the fixing base (1), and a ball (32) that is mounted in the assembly sleeve (31) and connected to the connection base (2); the fixing base (1) is fixed on a plane and a handle (21) is disposed on each of two sides of the connection base (2); a fastener (22) is set on each of at least two corners on at least one diagonal line of the connection base (2) so as to lock and fix the tablet computer (4) diagonally.

2. The device as claimed in claim 1, wherein the universal ball joint (3) further includes a fastening sleeve (33) that is connected to the assembly sleeve (31).

3. The device as claimed in claim 2, wherein the assembly sleeve (31) is mounted with an elastic part (34) therein and the elastic part (34) is elastically against the ball (32).

4. The device as claimed in claim 3, wherein a ring gasket (35) is placed around a top end of the elastic part (34) and the ring gasket (35) is against the ball (32).

5. The device as claimed in claim 1, wherein a sliding slot (23) corresponding to each fastener (22) is arranged at the connection base (2); the fastener (22) is mounted in the sliding slot (23) and moved within the sliding slot (23).

6. The device as claimed in claim 5, wherein the fastener (22) includes a threaded rod (221) and a stop block (222) on a top end of the threaded rod (221); a bottom end of the threaded rod (221) is passed through the sliding slot (23) to be connected and fastened to a threaded cap (223).

7. The device as claimed in claim 6, wherein a projection portion (231) is disposed on a periphery of each of the two sliding slots (23) set diagonally.

8. The device as claimed in claim 1, wherein a wireless video transceiver (5) is disposed in the connection base (2); once the tablet computer (4) and the wireless video transceiver (5) are connected with each other, video signals from the tablet computer (4) are transmitted to the wireless video transceiver (5) and then the wireless video transceiver (5) sends the video signals having image signals and audio signals to a display disposed with a wireless video receiver.
